# EUROPEAN PATENT APPLICATION

(11) **EP 0 881 112 A1**
(43) Date of publication of application: **02.12.1998**
(21) Application number: 98109724.9
(22) Date of filing: 28.05.1998
(51) Int. Cl.: B60J 7/16, B62D 33/08

(54) **Integrated system for large-volume containers and transport means**

(30) Priority: 30.05.1997 IT PD970116; 28.11.1997 IT PD970274; 30.01.1998 IT PD980016
(71) Applicant: Aghito Sistemi S.r.l., 35027 Noventa Padovana (Padova) (IT)
(72) Inventor: Tognin, Sergio, 35027 Noventa Padovana (IT)
(74) Representative: Gustorf, Gerhard, Dipl.-Ing.

(57) **Abstract**

The invention is a new multipurpose integrated system for the transport of large volumes, in which it is possible to adjust the height of the structure, and therefore of the loading volume, according to different situations, both during transport and in the loading and unloading phases. The system comprises a new superstructure in which the roof (7) and the doors (3)(rear, front, side) slide at the same time. All the used doors (3) are provided with hinges fixed to vertically sliding door frames and with structural closings whose section does not exceed the thickness of the doors themselves. The system permits both the lowering of the roof (7) in order to reduce resistance to the wind during transport and its raising beyond the standard height to facilitate the loading-unloading operations and to make it possible to use all the volume available. The system comprises a lower cross member (1.3) connected to the vertical sliding rods (1.2) by means of an extendable connection system provided with guide pins that ensure the correct sliding of the cross member itself.

## Description

The invention concerns the sector of industrial and commercial transport in general and the structure of the loading bodies of motor vehicles, supported containers, containers, travelling shops, etc.

The loading platform of vehicles, supported containers, transport containers is generally equipped with a metal structure or frame positioned above it, which is commonly called hoop assembly and on which a covering cloth or a rolled metal section, laminated synthetic material or other material is laid. In other cases, the loading platform is provided with rigid roof and walls, which are insulated if necessary.

The rigid or flexible structures provided on the loading platform have the lateral and vertical dimensions prescribed by the law and by the rule of the road, so that they can travel exploiting the maximum volume possible. The height of these structures generally exceeds the height of the driver's cab and spoilers are normally provided on the cab roof in order to reduce the air resistance due to the greater height of the loading platform structures.

If when the vehicle is fully loaded the maximum height of the covering structure is justified by the presence of the load itself, when the vehicle is empty or only partially loaded the considerable dimensions of the covering structure become a negative factor, since they hinder the advancement of the vehicle and increase the surface subjected to side winds. Furthermore, the arrangement of the vehicle with fixed standard height may make it impossible to use the vehicle as supported container, modile body, container, etc. on routes where tunnels lower than usual are present.

Up to now the problem has been solved by installing the structure roof on vertical extendable rods: these rods are rigid and fixed to the loading platform and their upper end, to which the roof structure is fixed, can be extended or retracted in such a way as to lift or lower the roof, according to the specific cases (full load, partial load, no load). The connection between the side walls, the fixed loading doors and the roof is achieved through rigid walls or sliding or bellows canvas tops.

These structures, however, present a series of drawbacks, constituted by the fact that the connection walls or canvas coverings are subject to frequent breakage, water infiltrations that damage the load, air infiltrations that make the vehicle unstable in case of wind. In fact, it is difficult to connect to upper edge of the door with the edge of the movable roof and therefore the roof structure is quite unstable, particularly in correspondence with the door/doors.

In order to eliminate all the above mentioned drawbacks, a new integrated system with large-volume upper structure for the loading compartments of vehicles and transport means in general has been designed and implemented.

In the now superstructure, the structure that makes up the roof and the entire door/doors (rear, front, side doors) can move vertically at the same time, while overturning and/or fixed boards anchored to the platform on all sides can be used or not; said boards serve to contain the goods and also as solid and reliable closing elements when the roof is raised. The doors used are all provided with hinges and structural closing elements whose section does not exceed the thickness of the doors themselves.

All the vertical rods of the structure comprise two parts that slide with respect to each other, one of which is fixed to the platform (fixed male column), while the other (sliding rod) supports the upper and lower cross members and also the doors, wherein the assembly of said moving parts and the upper cross member constitute the door frame. Said rods can be extended by means of suitable mechanisms or devices, such as pneumatic pistons, hydraulic pistons, rack shafts, pulleys or similar devices.

In particular, each pair of rods that together with the upper and lower cross members make up the movable part of the door frame are constituted by complementary section bars that partially slide on fixed columns. The complex polygonal sections of said two section bars serve to ensure the sliding of the movable section bar on the fixed section bar.

A section bar is stably fixed to the loading platform, while the other slides vertically by means of the mechanisms or devices mentioned above The side of said sliding section bar (rod of the door frame) is provided with supports, compartments or other elements suitable for the insertion and fastening of the matchboards positioned under the lateral canvas covering, which also serve to contain the load and to connect the various rods.

The rear (or front or side) loading and unloading door, more precisely, its rotation hinges, are fixed to said vertically sliding rods, so that the upper edge of the door is always in correspondence with the roof edge.

While the upper fastening points of the door are positioned on the upper cross member of the movable door frame, the lower fastening points that are usually provided on the edge of the loading platform are positioned on a horizontal bar or cross memeber fixed and hinged to the same vertically sliding rods to which the door hinges are fixed, too. In this way, it is always possible to constrain the lower edge of the door/doors to said bar and therefore to the structure, independently of the height of the roof and of the loading and unloading door/doors.

Said lower horizontal bar can be permanently fixed to the rods, but it can also be removed, even telescopically, rotated or overturned in such a way as to ensure normal access to the loading compartment even when the roof and the door/doors are not in the lower position. Likewise, said bar can be divided into two or more hinged, fixed or constrained parts, so that it can be removed and/or rotated when the loading and unloading door must be opened.

If the bar is divided in more segments, in order to reinforce it one or more pins are to be placed on the edge of one segment of the bar, said pins being suitable for fitting into corresponding holes obtained on the edge of the other corresponding segment when the bar components are disassembled, while the complementary heads are shaped in such a way as to resist the dynamic actions due to the movement of the vehicle.

The whole covering structure of the vehicle's loading compartment, together with the doors, is applied and fixed onto the vertically sliding structure, so that when the roof is lowered the lower edge of the covering, be it made of rigid walls or folding canvas, is positioned in correspondence with or near the edge of the loading platform.

Fixed or movable (overturning or of other types) boards can be provided in correspondence with the edge of the loading platform, on the sides where the doors and/or the rigid walls or removable canvas coverings are installed.

Said boards may generically be slightly higher than the vertical stroke of the roof and if canvas coverings are used the lateral surface of said boards, outside the loading compartment, is provided with locks, hooks, anchorage edges or other elements to which the lower edge of the canvas covering is fastened.

In fact, when the closing structure of the loading compartment is raised, both the roof and the side walls anchored to it are raised, too. As a consequence of this, the lower edges of said walls of the covering may leave the underlying area uncovered. The overturning or otherwise removable or fixed boards mentioned above provide a valid and firm fastening point for the lower edge of the covering walls and at the same time ensure the complete closing of the loading compartment and contain the load itself while it is subjected to the stresses and movements deriving from acceleration, braking and steering manoeuvres of the vehicle.

This function of the boards is important for the side walls, but is even more important for the rear (or front) wall of the loading compartment in which the door, which is lifted together with the roof, would leave the area included between its lower edge and the edge of the loading platform uncovered.

It is known that the height of the loading platform board is inferior to the distance of the loading platform edge from the ground, therefore said height of the board also determines the maximum length of the structure stroke.

The boards, the loading compartment covering and the loading und unloading door are arranged so that the upper edges of all the boards are always positioned inside the lateral movable walls and the loading and unloading door/doors.

In order to contain the load in case of abrupt changes of direction and above all when the load moves and hits the compartment walls, a containing device to be applied to the structure described above has been implemented. Said device comprises a series or matchboards (or axes) suitable for being anchored to the columns described above, each end of said axes being provided with a vertical through pin for the insertion into corresponding housings provided on said columns. The distance between said axes, their dimensions and quantity depend on the load to be transported.

The sandwich-type roof of the compartment is provided with one or more slightly curved stiffening elements, which do not protrude either from the upper or from the lower side and whose shape favours the drainage of rainwater.

The above mentioned system can be applied to any transport means, for road, railway or combined transport.

As far as railway or combined transport means are concerned, the position of the vehicle can be inverted, so that the rear access door is positioned frontally.

As a consequence of this, in order to ensure safety and avoid water infiltrations, said front or rear door/doors must be capable of resisting to the accidental impacts of the load positioned inside. To reinforce the door, the structure must be provided with one or more coupling and safety devices comprising a plate fixed on the vertical edge opposite the hinge on one side and provided - on the other side - with one or more pins that when the door is closed fit into corresponding holes obtained on the corresponding vertical edge of the other wing.

This solution requires the presence of boards even in correspondence with the door, with consequent problems due to the simultaneous presence of the vertical rods, door hinge points, board fastening points and lower door fastening bar.

Every door frame comprises two parts that slide with respect to each other, made up by two columns fixed to the loading platform and two movable rods that support the upper and lower cross members, wherein the assembly of said movable parts and cross members constitute the movable door frame. The height of the door is equal to the maximum height of the structure, that is, it closes the opening completely.

Consequently, during the transport phase the lower edge of the door and the lower bar connected to it together with the various locking mechanisms slide between the height of the loading platform (high) and the height of the safety bar (low).

The column section bar is stably fixed to the loading platform, while the rod section bar slides vertically by means of the mechanisms or devices mentioned above.

In particular, the door frame is not aligned with the rear terminal edge of the loading platform, but it is positioned so that with the downward movement of the superstructure the door can slide downwards and at the same time remain adherent to the rear terminal edge of the loading platform.

The rear loading and unloading door, or more precisely its rotation hinges are fixed to said vertically sliding rods, so that the door slides, too and therefore the upper edge of the door is always positioned in correspondence with the roof edge, the door being supported by the rods and the upper cross member.

The upper fastening points of the door are positioned on the upper cross member of the movable door frame, while the lower fastening points that are normally provided on the edge of the loading platform are positioned on the lower cross member of the movable door frame. In this way, it is always possible to constrain the door wings perfectly on the four sides of the door frame and between their adjacent ends, independently of the height of the roof and therefore of the loading and unloading door/doors. The lower cross member, which slides together with the door, permanently serves as horizontal and vertical support of the door wings themselves, guaranteeing the stiffness of the door and its watertightness independently of its position.

The entire covering structure of the vehicle's loading compartment is applied and fixed onto the vertically sliding structure, so that the roof is in the lowest possible position according to the load contained in the vehicle.

The door closing system and in particular the relevant hinges may comprise vertical rotation shafts, in single pieces or as an assembly of half-shafts, housed in the doors and having, in their whole length or uniquely in correspondence with the horizontal hinge elements, polygonal section suitable for coupling with the corresponding holes of said horizontal hinges better illustrated in the following examples.

Sometimes it is not possible to load goods among the hoop assembly, due to the difficult loading and positioning manoeuvres in reduced spaces, especially if forklift trucks are used to load pallets full of goods and in order to eliminate these inconveniences the superstructure slides even beyond the limit outline.

The entire hoop assembly has a vertical stroke that moves the top of the covering to a height exceeding that allowed by the rule of the road, in such a way as to facilitate the positioning of the load on the platform. As soon as the loading operation has been completed, the hoop assembly is lowered to the maximum allowed height.

The applications in which the roof slides upwards facilitate loading and unloading operations in general and make it possible to exploit the loading volume completely.

The system comprises elastic elements, for example springs, that connect said lower cross member (or bar) to the sliding rods and guide pins are provided to ensure the correct sliding of the cross member.

The door frame is substantially aligned with the rear terminal edge of the loading platform, that is, the rear terminal edge of the vertical rods and of the cross member are practically aligned with the rear edge of the loading platform. Particularly, the lower cross member (or bar) of the door frame is always positioned under the loading platform, even in order not to hinder any loading operation with open door/doors.

The rear loading and unloading door, or, more precisely, its rotation hinges, are fixed to said vertically sliding rods and therefore the door slides, too and the upper edge of the door is always in correspondence with the roof edge, the door being supported by the rods.

The upper fastening points of the door are positioned on the upper cross members of the movable door frame, while the lower fastening points are positioned on the lower cross member of the movable door frame. In this way, it is always possible to constrain the door wings perfectly to the four sides of the door frame and between their adjacent ends, independently of the height of the roof and therefore of the loading and unloading door/doors, but provided that the lower edge of the door is positioned under the vehicle's loading platform. The lower cross member, which slides together with the door, permanently serves as horizontal and vertical support of the door wings themselves, guaranteeing the stiffness of the door and its watertightness independently of its position.

The entire covering structure of the vehicle's loading compartment is applied and fixed onto the vertically sliding structure, so that the roof is in the lowest possible position according to the load contained in the vehicle.

In particular, due to the extendable connection system, the lower cross member of the door frame is elastically constrained to the door frame itself and follows its movements, in all the positions included between the lowest position and the highest position determined by its resting on the lower surface of the platform edge. When, on the other end, in order to facilitate the loading of the material, the hoop assembly is raised to its highest position, that is, beyond the limit outline, with the door open and therefore not constrained to the lower cross member, said lower cross member rests on the lower surface of the platform edge, while the remaining port of the door frame, the vertical rods and the upper cross member follow the lifting of the hoop assembly; the connection between said bar and the movable door frame is achieved by means of two or more elastic elements with guides.

In this position it is easier and more comfortable to handle and store the load to be transported, even with mechanical means like forklift trucks, and it is possible to exploit all the upper volume, including areas that were not accessible before.

When the load has been positioned, the hoop assembly is lowered as much as possible. In this operation the lower cross member is connected to the rest of the door frame by means of the extendable connection system and a mutual and resisting connection between the door and the door frame is ensured. In fact, the extendable connection system limits the travel of the lower cross member, while the closing systems of the door - side, upper and lower - keep the door, the door frame and the lower cross member integrally constrained to one another.

When it is necessary to unload part of the goods, it is sufficient to open the door/doors, raise the hoop assembly beyond the limit outline, load or unload or reposition the goods and lower the hoop assembly again to the lowest position permitted by the load itself.

The following is an example of a practical application among many of the invention in question, illustrated in the enclosed drawings.

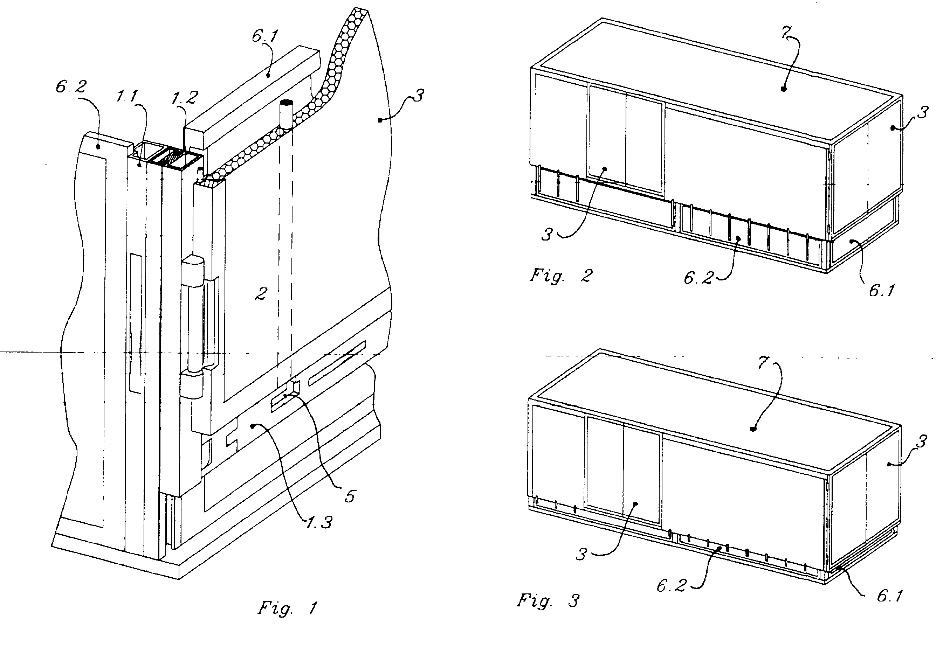

Figure 1 is an axonometric view of a section of a rear corner of the new covering structure.

It is possible to see the two complementary polygonal section bars (1.1, 1.2) that in this case constitute the rear door frame. One of them (1.1) has a generical C-shaped section, while the other (1.2) has quadrangular section with a T-shaped protrusion; the T-shaped protrusion of the second section bar (1.2) is housed inside the first section bar (1.1) between the ends of its C-shaped section.

The second section bar rod (1.2) slides vertically due to the action of appropriate mechanisms that are not represented in the figure.

The pivots of the hinges (2) of the rear door (3) of the loading compartment are fixed to said rear rod (1.2), so that the vertical movement of the section bar (1.2) is accompanied by an identical movement of the door (3).

In correspondence with the lower edge of the door (3) a horizontal bar (1.3) is provided, to which the fastening, coupling, support and closing elements (5) of the lower part of the rear door (3) are fixed.

Said bar (1.3) can be removed or rotated in order to permit access to the loading compartment even when the door (3) is not in the lower position; furthermore, said bar (1.3) can be either a single piece or be made up by several, disassemblable or rotating elements, in such a way as to be easier to handle.

In Figure 1 it is also possible to observe the removable boards (6.1, 6.2) provided on the rear edge and on the side edges of the loading platform of the vehicle; said boards, beside providing a valid and firm fastening point for the lower edge of the covering walls, ensure that the loading compartment can be completely closed at the different heights of the roof and that the load is correctly contained in the compartment during all the transport phases.

Figures 2 and 3 show the two extreme lifting and lowering positions of the covering (7) and of the door (3). These figures clearly show the need to provide the boards (6.1, 6.2), in particular the rear board (6.1), and their usefulness.

Figure 4 is an axonometric view of a section of a rear angle of the movable structure.

It is easy to see the two complementary polygonal section bars that in this case constitute the rear movable rod (1.2) and the fixed male column (1.1). One of them, the male column (1.1), has a generic C-shaped section, while the other movable rod (1.2) has a generic quadrangular section with a groove (1.2a) for the fastening of the covering canvas.

The movable rod (1.2) slides on the column (1.1) by means of suitable mechanisms; the lower (1.3) and upper (1.4) cross members are applied on the movable rod (1.2), in such a way as to make up the door frame that slides together with the entire superstructure. The height of the door frame is equal to the maximum height of the structure, that is, the door frame closes the opening completely.

The pivots of the hinges (2) of the rear door (3) of the loading compartment are fixed to the movable rod (1.2), so that the vertical movement of the movable rod (1.2) is accompanied by an identical movement of the door (3).

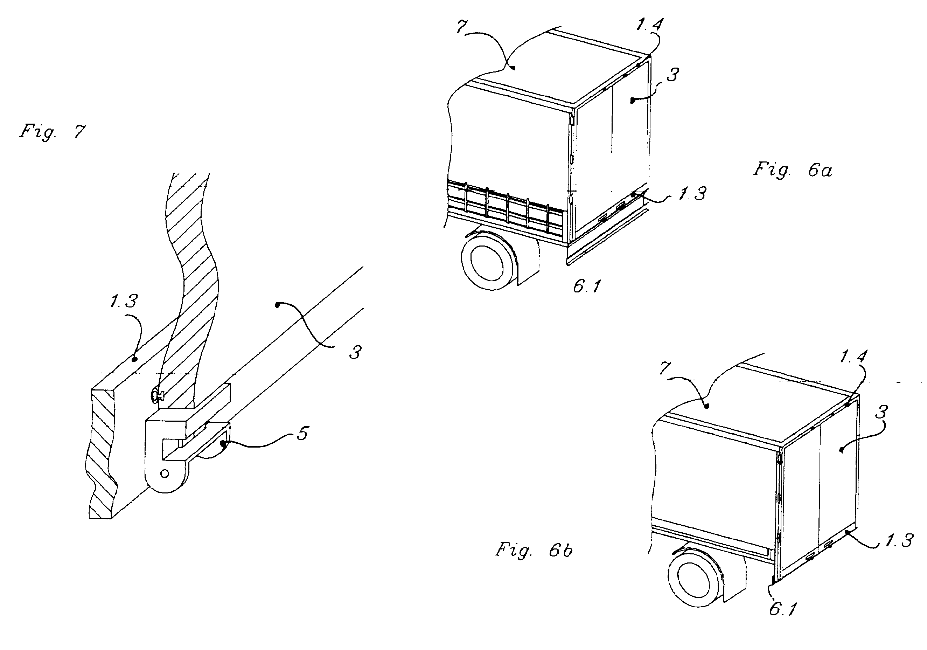

In particular, the door frame is not aligned with the rear terminal edge of the loading platform, but it is positioned so that with the downward movement of the superstructure the door (3) can slide downwards and at the same time remain adherent to the rear terminal edge of the loading platform (Fig. 6a and 6b).

The upper fastening points of the door (3) are positioned on the upper cross member of the movable door frame (1.4), while the lower fastening points of the door (3) that are normally provided on the edge of the loading platform are positioned on the lower cross member (1.3) of the movable door frame.

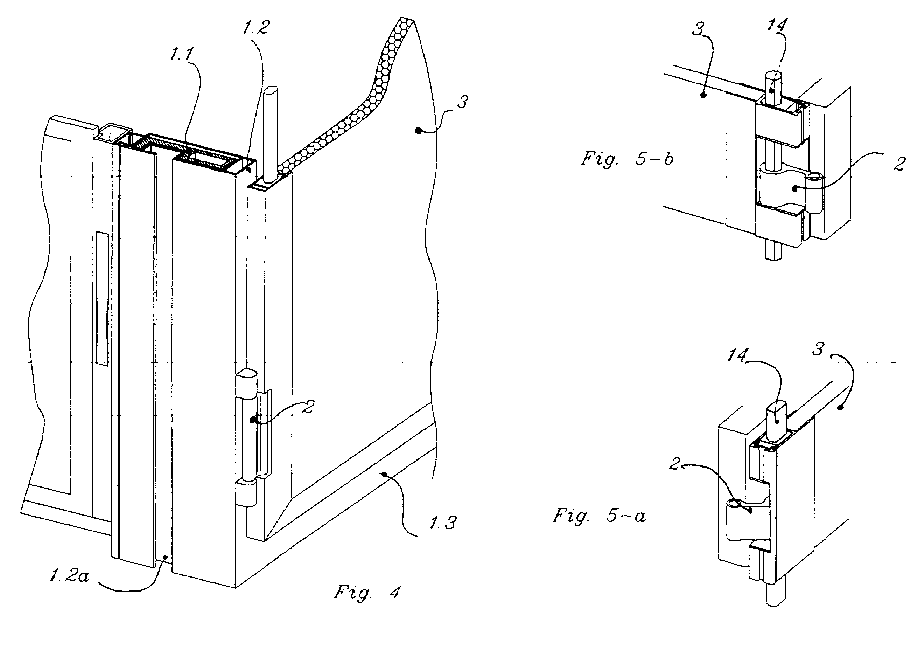

Figures 5a and 5b show the structural hinges (2) - in open and closed position, respectively - that connect the door (3) to the movable rod (1.2) and are crossed by polygonal-section shafts (14).

Figures 6a and 6b show the two extreme lifting and lowering positions of the covering (7) and of the door (3). It is possible to observe the safety bar (6.1), near which the lower cross member is positioned when it is in its lowest position. Figure 7 shows a detail of the lower bar, to which the door wings - which in turn rest on the supports (5)() integral to said lower bar (1.3) - adhere.

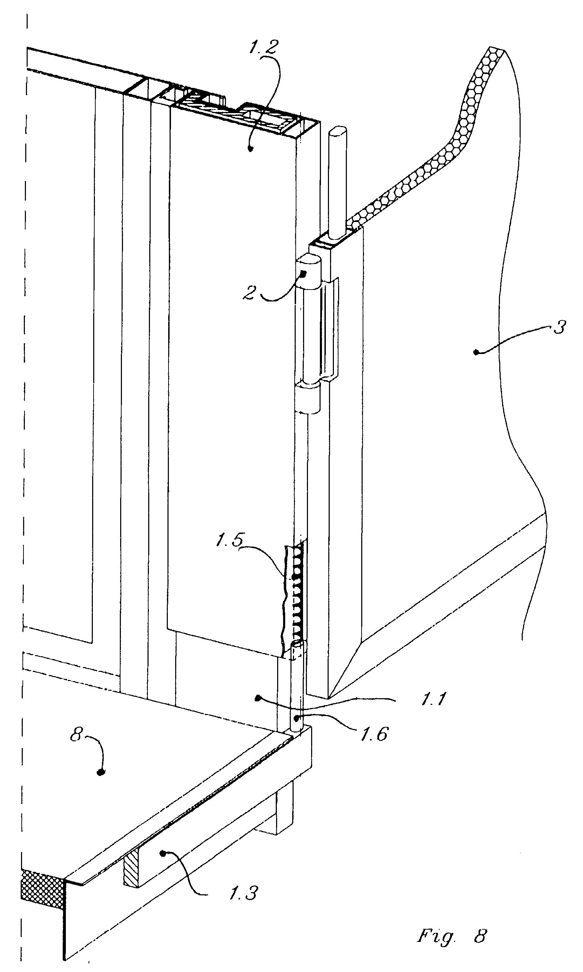

Figure 8 is an axonometric view of a section of a lower rear angle of the movable structure.

It is possible to observe the two complementary polygonal section bars that in this case constitute the rear movable rod (1.2) and the fixed male column (1.1).

The movable rod (1.2) slides on the male column (1.1) by means of suitable mechanisms; the upper cross member (not represented in the figure) and the lower cross member (or lower bar) (1.3) are applied to the movable rod (1.2).

As shown in the figure, the lower cross member (1.3) is connected to the vertical sliding rod (1.2) by means of an extendable connection system, which here is represented with a spring (1.5) and some guide pins (1.6).

The pivots of the hinges (2) of the rear door (3) of the loading compartment are fixed to said movable rod (1.2), so that the vertical movement of the movable rod (1.2) is accompanied by an identical movement of the door (3).

The upper fastening points of the door (3) are positioned on the upper cross member (1.4) of the movable door frame, while the lower fastening points of the door (3) are positioned on the lower cross member (or bar) (1.3).

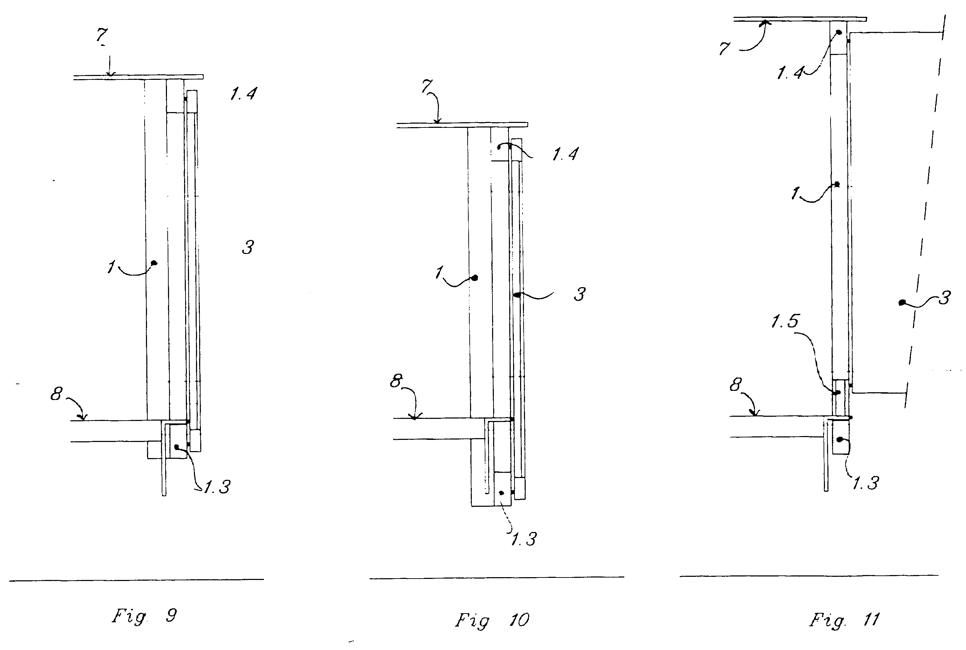

When the hoop assembly (7) and the door frame (1) are lowered (Figure 9), the movable rods (1.2) are firmly connected to the lower cross member (1.3) by means of the extendable connection system (1.5).

When the vehicle is traveling with full load the hoop assembly (7) and the door frame are positioned at the maximum allowable height (Figure 9 or 10). In this situation the door frame (1) is positioned at a height at which the lower cross member (1.3) is perfectly joined to the movable rods (1.2) and adheres to the lower surface of the loading platform (8).

When it is necessary to load, unload or change the position of the goods (maximum of the transportable volume) the hoop assembly (7) and the door frame (1) are raised to their highest position (Figure 11). In this position, with open doors, the lower cross member (1.3) still adheres to the edge of the loading platform (8), it does not adhere to the raised movable rod (1.2), but it remains connected to it owing to the action of the extendable elastic connection system (1.5).

The above are the basic outlines of the invention, on the basis of which the technician will be able to provide for implementation; any change which may be necessary upon implementation is to be regarded as completely protected by the present invention, provided that it is based on the innovative concept described herein.

With reference to the above description and to the attached drawings, the following claims are put forth.

## Claims

1. Integrated system for large-volume containers and transport means provided with roof and walls with variable height, characterized in that it is provided with one or more door frames that slide vertically on fixed columns, and wherein said door frames support the covering and the walls and the loading and unloading door/doors has/have its/their hinges applied to the vertically sliding rods, so that the upper edge of the door/doors is always positioned in correspondence with the covering edge.

2. Integrated system for large-volume containers and transport means provided with roof and walls with variable height according to claim 1, characterized in that it is provided with a horizontal bar fixed to said vertically sliding structure and positioned in correspondence with the lower edge of the loading door, and wherein said horizontal bar is provided with the door lower fastening points, which are usually positioned on the edge of the loading platform.

3. Integrated system for large-volume containers and transport means provided with roof and walls with variable height according to claims 1, 2, characterized in that said horizontal bar can be removed, rotated or overturned in such a way as to ensure normal access to the loading compartment even when the roof and the door are not lowered, and wherein said bar is made up by a single piece or divided into two or more parts that are hinged, fixed or otherwise constrained to one another and to the moving structure, so that the bar can be more easily removed and/or rotated when the loading and unloading door is opened.

4. Integrated system for large-volume containers and transport means provided with roof and walls with variable height according to the previous claims, characterized in that said lower bar can be divided in more segments, and wherein, in order to reinforce it, one or more pins are positioned on the edge of a segment of the bar and when the bar components are disassembled said pins fit into corresponding holes obtained on the edge of the other corresponding segment, and wherein the complementary heads are shaped in such a way as to resist the dynamic actions due to the movement of the vehicle.

5. Integrated system for large-volume containers and transport means provided with roof and walls with variable height according to claims 1, 2, 3, 4, characterized in that it also comprises removable boards on the side, front and rear edges of the loading platform, and wherein said removable boards are provided - on their side surface outside the loading compartment - with locks, hooks, anchorage edges or other means for the fastening of the lower edge of the loading compartment covering.

6. Integrated system for large-volume containers and transport means provided with roof and walls with variable height according to claim 4, characterized in that the door/doors is/are provided with one or more safety coupling devices comprising a plate fixed to the vertical edge opposite the hinge on one side and provided - on the other side - with one or more pins that when the door is closed fit into corresponding holes obtained on the corresponding vertical edge of the other wing.

7. Integrated system for large-volume containers and transport means provided with roof and walls with variable height, characterized in that the door height corresponds to the clearance of the door frame when this is raised to its highest position, and wherein the door frame comprises two vertical rods that slide on fixed male columns, an upper and a lower moving cross member rigidly connected to said vertical sliding rods.

8. Integrated system for large-volume containers and transport means provided with roof and walls with variable height according to claims 1 and 7, characterized in that part of the door frame, the door and the lower cross member protrude from the loading platform, and wherein the door is suitable for sliding downwards and at the same time always adheres to the rear terminal edge of the loading platform.

9. Integrated system for large-volume containers and transport means provided with roof and walls with variable height according to claims 1 and 8, characterized in that the door rotation hinges are fixed to said vertically sliding rods, and wherein the upper edge of the door is always positioned in correspondence with the roof edge, the door being supported by the rods and by the upper cross member.

10. Integrated system for large-volume containers and transport means provided with roof and walls with variable height according to claim 7, characterized in that the upper fastening points of the door are positioned on the upper cross member of the movable door frame, while the lower fastening points of the door frame are positioned on said lower cross member.

11. Integrated system for large-volume containers and transport means provided with roof and walls with variable height according to claim 7, characterized in that said lower cross member is rigidly fixed to said rods or hinged to them, or is completely or partially removable.

12. Integrated system for large-volume containers and transport means provided with roof and walls with variable height, provided with vertical sliding rods and an upper cross member integrally connected to them according to claim 7, characterized in that when it is necessary to load or unload goods the assembly constituted by the roof, walls, movable rods and door/doors slides to a height that exceeds the maximum height allowed by the rule of the road and during transport can be lowered to the lowest possible position according to the load contained in the vehicle.

13. Integrated system for large-volume containers and transport means according to claims 7 and 12, characterized in that the lower cross member (or bar) is connected to said vertical sliding rods by means of extendable connection devices.

14. Integrated system for large-volume containers and transport means according to claims 7 and 13, characterized in that the connection between said vertical sliding rods and said lower cross member comprises elastic elements, and wherein the vertical guide shafts ensure the correct sliding of the cross member.

15. Integrated system for large-volume containers and transport means provided with roof and walls with variable height, characterized in that the roof ( ) is provided with one or more slightly curved stiffening elements which do not protrude either from the upper or from the lower side and whose shape favours the drainage of rainwater.

16. Integrated system for large-volume containers and transport means provided with roof and walls with variable height, characterized in that it comprises a series of matchboards (or axes), suitable for being anchored to said rods, each end of said axes being provided with a vertical through pin for the insertion into corresponding housings provided on said rods.
